# EUROPÄISCHE PATENTSCHRIFT

(11) **EP 2 702 325 B1**
(45) Veröffentlichungstag und Bekanntmachung des Hinweises auf die Patenterteilung: **22.04.2015**
(21) Anmeldenummer: 12702441.2
(22) Anmeldetag: 11.01.2012
(51) Int. Cl.: F23G 7/06, F23G 5/50, F02C 3/30, F02C 3/22

(54) **VERFAHREN UND VORRICHTUNG ZUR ERZEUGUNG VON STROM UND GIPS AUS SCHWEFELWASSERSTOFFHALTIGEN ABGASEN**
METHOD AND DEVICE FOR GENERATING ELECTRICITY AND GYPSUM FROM WASTE GASES CONTAINING HYDROGEN SULFIDE
PROCÉDÉ ET DISPOSITIF DE PRODUCTION DE COURANT ET DE GYPSE À PARTIR DE GAZ PERDUS CONTENANT DE L'ACIDE SULFHYDRIQUE

(30) Priorität: 28.04.2011 DE 102011002320
(43) Veröffentlichungstag der Anmeldung: 05.03.2014
(73) Patentinhaber: Knauf Gips KG, 97346 Iphofen (DE)
(72) Erfinder: HUELLER, Rolf, 97332 Volkach (DE)
(74) Vertreter: Schlögl, Markus
(86) Internationale Anmeldenummer: PCT/EP2012/050360
(87) Internationale Veröffentlichungsnummer: WO 2012/146399

(56) Entgegenhaltungen:
- DE-A1- 2 524 861
- DE-A1- 19 939 390
- DE-A1-102008 037 502
- US-A1- 2009 226 353
- US-A1- 2010 061 906
- US-A1- 2010 162 678
- Andrew M Dunster: "Flue gas desulphurisation (FGD) gypsum in plasterboard manufacture", , 30. November 2007 (2007-11-30), XP55024708, Gefunden im Internet: URL:http://www.smartwaste.co.uk/filelibrar y/Plasterboard_FGD_gypsum.pdf [gefunden am 2012-04-17]

## Beschreibung

Die Erfindung betrifft ein Verfahren und eine Vorrichtung zur Erzeugung von Strom aus schwefelwasserstoffhaltigen Abgasen, insbesondere aus der Erdgas- und Erdölindustrie.

Ein derartiges Verfahren sieht vor, dass die schwefelwasserstoffhaltigen Abgase einer Stromerzeugungseinrichtung zugeführt und dort, vorzugsweise unter Zuführung von Luft, verbrannt werden, wobei die bei der Verbrennung freiwerdende Energie zumindest teilweise zur Stromerzeugung eingesetzt wird.

Bei einer derartigen Vorrichtung ist eine Stromerzeugungseinrichtung vorgesehen, in der zugeführte schwefelwasserstoffhaltige Abgase, vorzugsweise unter Zuführung von Luft, verbrannt werden, wobei die bei der Verbrennung freiwerdende Energie zumindest teilweise zur Stromerzeugung eingesetzt wird.

Abgase, insbesondere Abgase aus der Erdgas- und Erdölindustrie, werden häufig ohne weitere Verwertung einfach abgefackelt, d.h. beim Austritt des Abgases aus einem Kamin oder Rohr in die Umwelt werden diese ohne energetische Verwertung verbrannt. Die entsprechende Menge Kohlendioxid wird hierbei an die Umwelt abgegeben.

Diese Abgase enthalten Schwefelwasserstoff und sind daher für eine energetische Verwertung problematisch, aber grundsätzlich interessant.

Aus DE 199 39 390 A1 ist ein Verfahren zur thermischen Verwertung und Entsorgung von Deponiegas mit hohem bis geringen Methankonzentrationen bekannt. US 2009/0226353 A1 offenbart ein Verfahren zur Behandlung von sauren Gasen in stufenweiser Verbrennung mit Zwischenstufen-Wärmerückgewinnung. DE 25 24 861 A1 offenbart ein Verfahren zur Beseitigung von geruchsintensiven oder giftigen Stoffen. Als weiterer Stand der Technik seien US 5 798 087, DE 10 2008 037502 A1, US 2010/162678 A1 und US 2010/061906 A1 sowie "Andrew M Dunster: Flue gas desulphurisation (FGD) gypsum in plasterboard manufacture, 30. November 2007" und US 5 798 07 A und WO 2009/157434 A1 genannt.

Der vorliegenden Erfindung liegt die Aufgabe zugrunde, ein Verfahren und eine Vorrichtung anzugeben, das bzw. die eine energetische Nutzung schwefelwasserstoffhaltiger Abgase ermöglicht.

Diese Aufgabe wird hinsichtlich des Verfahrens durch die Merkmale des Anspruchs 1 und hinsichtlich der Vorrichtung durch die Merkmale des Anspruchs 9 gelöst. Vorteilhafte Ausgestaltungen und Weiterbildungen sind in den jeweils abhängigen Ansprüchen angegeben.

Das erfindungsgemäße Verfahren ist dadurch gekennzeichnet, dass die Zusammensetzung der schwefelwasserstoffhaltigen Abgase vor der Verbrennung gemessen und mit einer vorgegebenen Zusammensetzung oder einer vorgegebenen Zusammensetzungsbandbreite verglichen wird. Bei einem Abweichen von der vorgegebenen Zusammensetzung oder Zusammensetzungsbandbreite wird ein zur Korrektur erforderlicher zusätzlicher Anteil an Erdgas und/oder anderen Stoffen, insbesondere Gasen, ermittelt und den schwefelwasserstoffhaltigen Abgasen vor der Verbrennung zugemischt.

Die Vorteile der Erfindung liegen insbesondere darin, dass die schwefelwasserstoffhaltigen Gase nicht mehr ungenutzt entweichen, sondern dass sie energetische verwertet werden, indem sie zur Stromerzeugung eingesetzt werden.

Ein weiterer Vorteil der Erfindung liegt darin, dass sich sicherstellen lässt, dass eine für das Verfahren und insbesondere für die dabei vorgesehene Verbrennung der Abgase möglichst optimale Zusammensetzung der zu verbrennenden Abgase vorliegt.

Vorzugsweise liegt die Verbrennungstemperatur der schwefelwasserstoffhaltigen Abgase bei mindestens etwa 1.300 °C. Dies hat den Vorteil, dass bei derart hohen Verbrennungstemperaturen auch schädliche Begleitstoffe wie Kohlenmonoxid und Benzol vollständig zu Kohlendioxid und Wasser verbrennen und damit im Verbrennungsabgas nicht mehr oder zumindest nur deutlich reduziert vorkommen.

Eine Weiterbildung der Erfindung sieht vor, dass die Stromerzeugungseinrichtung einen Dampferzeuger umfasst, der Teil des thermodynamischen Kreislaufes eines Dampfkraftprozesses ist, der wiederum eine dem Dampferzeuger nachgeschaltete Dampfturbine und einen der Dampfturbine nachgeschalteten Kondensator umfasst. In dem Dampferzeuger erfolgt die Verbrennung der schwefelwasserstoffhaltigen Abgase. Die hierbei freiwerdende Energie wird zumindest teilweise zur Dampferzeugung eingesetzt. Die Stromerzeugung erfolgt schließlich durch einen von der Dampfturbine angetriebenen Generator. Es kann auch vorgesehen sein, den Dampf zumindest teilweise abzuzweigen und einer thermischen Nutzung zuzuführen, beispielsweise zu Heiz- bzw. Erwärmungszwecken. In diesem Fall ist das erfindungsgemäße Verfahren ein Verfahren zur Erzeugung von Strom und Dampf aus schwefelwasserstoffhaltigen Abgasen, insbesondere aus der Erdgasindustrie.

Alternativ oder additiv kann die Stromerzeugungseinrichtung auch eine Gasturbine und/oder einen Gasmotor umfassen. Die Stromerzeugung erfolgt in diesem Fall durch einen von der Gasturbine und/oder dem Gasmotor angetriebenen Generator.

Beispielsweise kann die vorgegebene Zusammensetzung oder die vorgegebene Zusammensetzungsbandbreite der schwefelwasserstoffhaftigen Abgase folgende Anteile in Molprozent vorsehen:
Schwefelwasserstoff: 1% bis 10%, insbesondere 3% bis 7%, vorzugsweise etwa 6%, und/oder
Kohlendioxid: 10% bis 90%, insbesondere 60% bis 70%, vorzugsweise etwa 65%, und/oder
Stickstoff: 0,0% bis 2,0%, insbesondere 0,2% bis 0,6%, vorzugsweise etwa 0,4%, und/oder
Methan: 0,1% bis 65%, insbesondere 12% bis 20%, vorzugsweise etwa 16%, und/oder
Ethan: 0,1% bis 20%, insbesondere 2% bis 8%, vorzugsweise etwa 5%, und/oder
Kohlenwasserstoffe (C4 bis C9): 0,01% bis 40%, insbesondere 4% bis 10%, vorzugsweise etwa 7%.

Eine Weiterbildung der Erfindung sieht vor, dass die bei der Verbrennung der schwefelwasserstoffhaltigen Abgase entstehenden schwefeloxidhaltigen, insbesondere schwefeldioxid- und schwefeltrioxidhaltigen Verbrennungsabgase einer Rauchgasentschwefelung zugeführt werden. Da die Verbrennungsabgase einen im Vergleich zu üblichen Verbrennungsabgasen sehr hohen Schwefeloxidanteil (insbesondere Schwefeldioxid- und Schwefeltrioxidanteil) haben, kann es zweckmäßig sein, eine mehrstufige Rauchgasentschwefelung vorzusehen, vorzugsweise eine mehrstufige Rauchgasentschwefelung umfassend einen Festbettreaktor zur Schwefeltrioxidabscheidung und eine Kalkwäsche (Nasswäsche) zur Schwefeldioxidabscheidung.

Beispielsweise kann bei einer mehrstufigen Rauchgasentschwefelung in einer Verfahrensstufe, vorzugsweise in einer ersten Verfahrensstufe, Schwefeltrioxid in einem Festbettreaktor abgeschieden werden. In einer anderen Verfahrensstufe kann Schwefeldioxid in der Nasswäsche abgeschieden werden. Im Festbettreaktor kann Kalkstein verwendet werden, beispielsweise der Körnung 4/6 mm. Dadurch lässt sich Schwefeltrioxid zu etwas 80% abscheiden. Zur Nasswäsche kann Kalksteinmehl eingesetzt werden, beispielsweise mit folgender Körnung: 90% unter 0,063 mm. Dadurch lässt sich Schwefeldioxid zu etwas 99 % abscheiden.

Mit einer derartigen mehrstufigen Rauchgasentschwefelung lassen sich beispielsweise 20.000 bis 50.000 mg/m³ Schwefeldioxid und 600 bis 1.500 mg/m³ Schwefeltrioxid aus den Verbrennungsabgasen abscheiden.

Ein wesentlicher Vorteil dieser mehrstufigen Rauchgasentschwefelung ist das Abscheiden von Schwefeltrioxid. Das Schwefeltrioxid würde eine reine Nasswäsche unverändert passieren, das heißt ohne den Festbettreaktor in einer der Verfahrensstufen würde das Schwefeltrioxid den Kamin erreichen und am Kaminaustritt Aerosolnebel bilden. Gerade bei der gemäß der Erfindung vorgesehenen Verbrennung schwefelwasserstoffhaltiger Abgase, insbesondere aus der Erdgas- und Erdölindustrie, ist der Anteil von Schwefeltrioxid sehr hoch, und dementsprechend kommt hier einer mehrstufigen Rauchgasentschwefelung mit Festbettreaktor zum Abscheiden von Schwefeltrioxid besondere Bedeutung zu.

Das bei der Rauchgasentschwefelung entstehende Gips wird einem Gipswerk zugeführt zur Herstellung von Gipsprodukten, beispielsweise Gipskartonplatten und/oder Fertiggipsmischungen. Das erfindungsgemäße Verfahren ist dann ein Verfahren zur Erzeugung von Strom und Gips aus schwefelwasserstoffhaltigen Abgasen, insbesondere aus der Erdgas- und Erdölindustrie.

Das vorgenannte Gipswerk kann seinen Bedarf an elektrischer Energie ganz oder teilweise aus der Stromerzeugung durch die Verbrennung der schwefelwasserstoffhaltigen Abgase decken. Auch kann vorgesehen werden, dass das Gipswerk seinen Wärmebedarf ganz oder teilweise den bei der Verbrennung der schwefelwasserstoffhaltigen Abgase entstehenden Verbrennungsgasen und/oder den Stromerzeugungs-Prozessen, insbesondere dem thermodynamischen Kreislauf des Dampfkraftprozesses, entnimmt. Ist vorgesehen, den Wärmebedarf ganz oder teilweise dem Dampfkraftprozess zu entnehmen, so kann dies dadurch erfolgen, dass Dampf abgezweigt und direkt dem Gipswerk zu Helz- bzw. Erwärmungszwecken zugeführt wird. Beispielsweise kann der Dampf zur Erwärmung der Trocknungs- und/oder Kalziniereinrichtungen des Gipswerks eingesetzt werden. Wird auch der Dampf thermisch genutzt, so ist das erfindungsgämäße Verfahren ein Verfahren zur Erzeugung von Strom, Gips und Dampf aus schwefelwasserstoffhaltigen Abgasen, insbesondere aus der Erdgas- und Erdölindustrie. Ein wesentlicher Vorteil hierbei ist, dass sich auf diese Weise eine Kohlendioxidabgabe des Gipswerks an die Umwelt vermeiden lässt.

Die erfindungsgemäße Vorrichtung ist dadurch gekennzeichnet, dass eine Messeinrichtung zur Ermittlung der Zusammensetzung der schwefelwasserstoffhaltigen Abgase vor der Verbrennung vorgesehen ist, eine Auswertungseinrichtung zum Vergleich der ermittelten Zusammensetzung mit einer vorgegebenen Zusammensetzung oder einer vorgegebenen Zusammensetzungsbandbreite vorgesehen ist, und eine Steuereinrichtung und eine Zuführeinrichtung für Erdgas und/oder anderen Stoffen, insbesondere Gase, vorgesehen sind, wobei die Steuereinrichtung bei einem von der Auswertungseinrichtung ermittelten Abweichen von der vorgegebenen Zusammensetzung oder Zusammensetzungsbandbreite einen zur Korrektur erforderlichen zusätzlicher Anteil an Erdgas und/oder anderen Stoffen, insbesondere Gasen, ermittelt und den schwefelwasserstoffhaltigen Abgasen vor der Verbrennung über die Zuführeinrichtung zumischt.

Diese Vorrichtung wird vorzugsweise mit dem vorstehend beschriebenen Verfahren gemäß der Erfindung betrieben.

Die Vorteile der erfindungsgemäßen Vorrichtung liegen wiederum insbesondere darin, dass die schwefelwasserstoffhaltigen Gase nicht mehr ungenutzt entweichen, sondern dass sie energetische verwertet werden, indem sie zur Stromerzeugung eingesetzt werden.

Ein weiterer Vorteil der erfindungsgemäßen Vorrichtung liegt darin, dass sich sicherstellen lässt, dass eine für die Vorrichtung und insbesondere für die darin vorgesehene Verbrennung der Abgase möglichst optimale Zusammensetzung der zu verbrennenden Abgase vorliegt.

Vorzugsweise liegt die Verbrennungstemperatur der schwefelwasserstoffhaltigen Abgase wie beim erfindungsgemäßen Verfahren bei mindestens etwa 1.300 °C.

Eine Weiterbildung der Vorrichtung sieht vor, dass die Stromerzeugungseinrichtung einen Dampferzeuger umfasst, der Teil des thermodynamischen Kreislaufes eines Dampfkraftprozesses ist, der wiederum eine dem Dampferzeuger nachgeschaltete Dampfturbine und einen der Dampfturbine nachgeschalteten Kondensator umfasst. In dem Dampferzeuger erfolgt die Verbrennung der schwefelwasserstoffhaltigen Abgase und die freiwerdende Energie wird zumindest teilweise zur Dampferzeugung eingesetzt. Ferner ist zur Stromerzeugung ein von der Dampfturbine angetriebener Generator vorgesehen. In der Vorrichtung kann auch vorgesehen sein, den Dampf zumindest teilweise abzuzweigen und einer thermischen Nutzung zuzuführen, beispielsweise zu Heiz- bzw. Erwärmungszwecken. In diesem Fall ist die erfindungsgemäße Vorrichtung eine Vorrichtung zur Erzeugung von Strom und Dampf aus schwefelwasserstoffhaltigen Abgasen, insbesondere aus der Erdgas- und Erdölindustrie.

Alternativ oder additiv kann die Stromerzeugungseinrichtung eine Gasturbine und/oder einen Gasmotor umfassen, wobei zur Stromerzeugung ein von der Gasturbine und/oder dem Gasmotor angetriebener Generator vorgesehen ist.

Beispielsweise kann die vorgegebene Zusammensetzung oder die vorgegebene Zusammensetzungsbandbreite der schwefelwasserstoffhaltigen Abgase folgende Anteile in Molprozent vorsehen:
Schwefelwasserstoff: 1% bis 10%, insbesondere 3% bis 7%, vorzugsweise etwa 6%, und/oder
Kohlendioxid: 10% bis 90%, insbesondere 60% bis 70%, vorzugsweise etwa 65%, und/oder
Stickstoff: 0,0% bis 2,0%, insbesondere 0,2% bis 0,6%, vorzugsweise etwa 0,4%, und/oder
Methan: 0,1% bis 65%, insbesondere 12% bis 20%, vorzugsweise etwa 16%, und/oder
Ethan: 0,1% bis 20%, insbesondere 2% bis 8%, vorzugsweise etwa 5%, und/oder
Kohlenwasserstoffe (C4 bis C9): 0,01% bis 40%, insbesondere 4% bis 10%, vorzugsweise etwa 7%.

Eine Weiterbildung sieht vor, dass die Vorrichtung eine Rauchgasentschwefelung umfasst, die bei der Verbrennung der schwefelwasserstoffhaltigen Abgase entstehende schwefeloxidhaltige, insbesondere schwefeldioxid- und schwefeltrioxidhaltige Verbrennungsgase reinigt, wobei Gips entsteht. Da die Verbrennungsabgase einen im Vergleich zu üblichen Verbrennungsabgasen sehr hohen Schwefeloxidanteil (insbesondere Schwefeldioxid- und Schwefeltrioxidanteil) haben, kann es zweckmäßig sein, eine mehrstufige Rauchgasentschwefelung vorzusehen, vorzugsweise eine mehrstufige Rauchgasentschwefelung umfassend einen Festbettreaktor zur Schwefeltrioxidabscheidung und eine Kalkwäsche zur Schwefeldioxidabscheidung.

Hinsichtlich weiterer Erläuterungen und Vorteile betreffend die mehrstufigen Rauchgasentschwefelung sei auf die vorstehenden Ausführungen im Zusammengang mit dem erfindungsgemäßen Verfahren verwiesen.

Weiter kann die erfindungsgemäße Vorrichtung ein Gipswerk umfassend, das den bei der Rauchgasentschwefelung entstehenden Gips zur Herstellung von Gipsprodukten einsetzt, beispielsweise bei der Herstellung von Gipskartonplatten und/oder Fertiggipsmischungen. Die erfindungsgemäße Vorrichtung ist dann eine Vorrichtung zur Erzeugung von Strom und Gips aus schwefelwasserstoffhaltigen Abgasen, insbesondere aus der Erdgas- und Erdölindustrie.

Das vorgenannte Gipswerk kann derart eingerichtet sein, dass es seinen Bedarf an elektrischer Energie ganz oder teilweise aus der Stromerzeugung durch die Verbrennung der schwefelwasserstoffhaltigen Abgase deckt. Auch kann das Gipswerk derart eingerichtet werden, dass es seinen Wärmebedarf ganz oder teilweise den bei der Verbrennung der schwefelwasserstoffhaltigen Abgase entstehenden Verbrennungsgasen und/oder den Stromerzeugungs-Prozessen, insbesondere dem thermodynamischen Kreislauf des Dampfkraftprozesses, entnimmt. Ist vorgesehen, den Wärmebedarf ganz oder teilweise dem Dampfkraftprozess zu entnehmen, so kann dies dadurch erfolgen, dass Dampf über eine Abzweigung direkt dem Gipswerk zu Heiz- bzw. Erwärmungszwecken zugeführt wird. Beispielsweise kann der Dampf zur Erwärmung der Trocknungs- und/oder Kalziniereinrichtungen des Gipswerks eingesetzt werden. Wird auch der Dampf thermisch genutzt, so ist die erfindungsgemäße Vorrichtung eine Vorrichtung zur Erzeugung von Strom, Gips und Dampf aus schwefelwasserstoffhaltigen Abgasen, insbesondere aus der Erdgas- und Erdölindustrie. Ein wesentlicher Vorteil hierbei ist, dass sich auf diese Weise eine Kohlendioxidabgabe des Gipswerks an die Umwelt vermeiden lässt.

Die Erfindung wird nachstehend auch hinsichtlich weiterer Merkmale und Vorteile anhand der Beschreibung von Ausführungsbeispielen und unter Bezugnahme auf die beiliegenden schematischen Zeichnungen näher erläutert. Dabei zeigen
- FIG 1: ein erstes Ausführungsbeispiel des erfindungsgemäßen Verfahrens bzw. der erfindungsgemäßen Vorrichtung,
- FIG 2: ein zweites Ausführungsbeispiel des erfindungsgemäßen Verfahrens bzw. der erfindungsgemäßen Vorrichtung, und
- FIG 3: ein drittes Ausführungsbeispiel des erfindungsgemäßen Verfahrens bzw. der erfindungsgemäßen Vorrichtung.

Einander entsprechende Teile und Komponenten sind in den Figuren mit den gleichen Bezugszeichen bezeichnet.

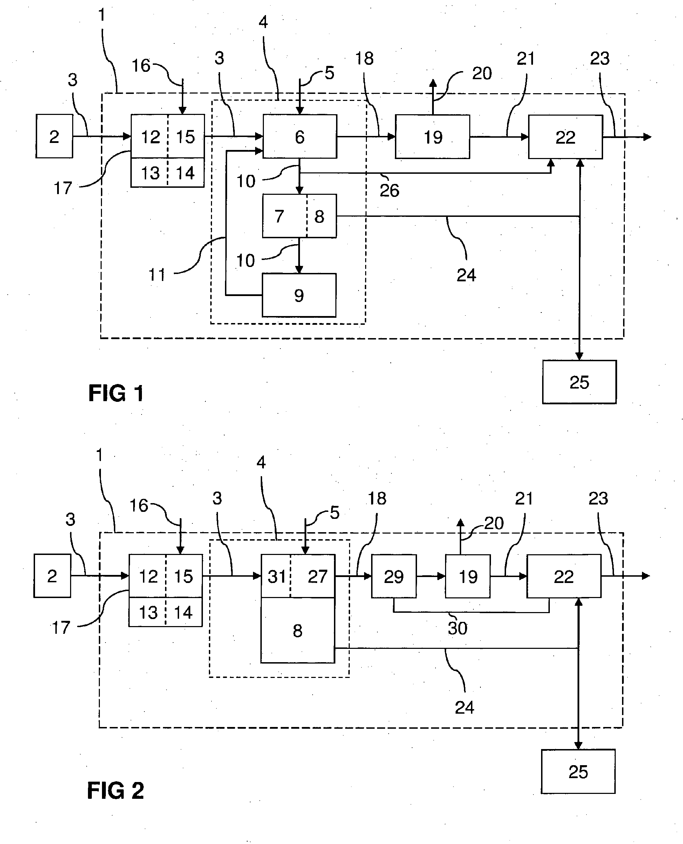

FIG 1 bis FIG 3 zeigen drei verschiedene Ausführungsbeispiele der Erfindung. Die Figuren verdeutlichen anhand des jeweiligen Ausführungsbeispiels sowohl das erfindungsgemäße Verfahrens 1 als auch die erfindungsgemäße Vorrichtung 1 zur Erzeugung von Strom aus schwefelwasserstoffhaltigen Abgasen 3 aus der Erdgas- und Erdölindustrie 2. Selbstverständlich sind Verfahren 1 und Vorrichtung 1 auch für schwefelwasserstoffhaltige Abgase 3 aus anderen Quellen einsetzbar.

Im ersten Ausführungsbeispiel nach FIG 1 werden die ankommenden schwefelwasserstoffhaltigen Abgase 3 zunächst einer Abgasmischeinrichtung 17 zugeführt, deren Aufgabe die Bereitstellung eines Abgases 3 ist, dessen Zusammensetzung einer vorgegebenen Zusammensetzung entspricht bzw. innerhalb einer vorgegebenen Zusammensetzungsbandbreite liegt. Beispiele für diese vorgegebene Zusammensetzung bzw. Zusammensetzungsbandbreite wurden vorstehend in der allgemeinen Beschreibung bereits angegeben.

Die Abgasmischeinrichtung 17 umfasst eine Messeinrichtung 12, mit der die Zusammensetzung der ankommenden schwefelwasserstoffhaltigen Abgase 3 ermittelt wird. Weiter umfasst die Abgasmischeinrichtung 17 eine Auswertungseinrichtung 13, die die ermittelte Zusammensetzung mit der vorgegebenen Zusammensetzung bzw. der vorgegebenen Zusammensetzungsbandbreite vergleicht.

Ferner umfasst die Abgasmischeinrichtung 17 eine Steuereinrichtung 14 und eine Zuführeinrichtung 15 für Erdgas und/oder anderen Stoffe, insbesondere Gase. Die Steuereinrichtung 14 ermittelt bei einem von der Auswertungseinrichtung 13 ermittelten Abweichen von der vorgegebenen Zusammensetzung oder Zusammensetzungsbandbreite einen zur Korrektur erforderlichen zusätzlichen Anteil an Erdgas und/oder anderen Stoffen, und sie wirkt derart mit der Zuführeinrichtung 15 zusammen, dass der ermittelte zur Korrektur erforderliche Anteil an Erdgas und/oder anderen Stoffen dem schwefelwasserstoffhaltigen Abgas 3 als Zumischgas 16 vor der Verbrennung über die Zuführeinrichtung 15 zumischt wird.

Anschließend werden die gegebenenfalls hinsichtlich ihrer Zusammensetzung korrigierten schwefelwasserstoffhaltigen Abgase 3 einer Stromerzeugungseinrichtung 4 zugeführt. Die Stromerzeugungseinrichtung 4 im Ausführungsbeispiel nach FIG 1 umfasst einen thermodynamischen Kreislauf 11 eines Dampfkraftprozesses. Hierzu umfasst die Stromerzeugungseinrichtung einen Dampferzeuger 6, dem das Abgas 3 zugeführt wird. In dem Dampferzeuger 6 werden die schwefelwasserstoffhaltigen Abgase 3 verbrannt, unter Zuführung von Luft 5, vorzugsweise bei einer Verbrennungstemperaturen von etwa 1300 °C. Die freiwerdende Energie wird im Dampferzeuger 6 zumindest teilweise zur Dampferzeugung eingesetzt.

Die Stromerzeugungseinrichtung 4 umfasst ferner eine Dampfturbine 7, die dem Dampferzeuger 6 nachgeschaltet ist. Der Dampfturbine 7 wird der von dem Dampferzeuger 6 erzeugte Dampf 10 zugeführt. Die Dampfturbine 7 wiederum ist mit einem Generator 8 gekoppelt, der von der Dampfturbine 7 zur Erzeugung von Strom 24 angetrieben wird. Der erzeugte Strom 24 kann in ein öffentliches Stromnetz 25 eingespeist und/oder elektrischen Verbrauchern zur Verfügung gestellt werden.

Weiter umfasst die Stromerzeugungseinrichtung 4 einen Kondensator 9, der der Dampfturbine 7 nachgeschaltet ist, d.h. nach Durchströmen der Dampfturbine 7 wird der Dampf 10 dem Kondensator 9 zugeführt. Vorzugsweise handelt es sich hierbei um einen luftgekühlten Kondensator 9.

Nach dem Kondensieren im Kondensator 9 wird die kondensierte Flüssigkeit und/oder noch vorhandener Dampf wieder dem Dampferzeuger 6 zugeführt, der thermodynamische Kreislauf 11 des Dampfkraftprozesses ist damit geschlossen.

Alternativ ist es auch möglich, den thermodynamischen Kreislauf 11 zu unterbrechen und nach dem Prinzip der klassischen Kraft-Wärme-Kopplung die im Dampf nach Durchströmen der Dampfturbine 7 noch enthaltene thermische Energie anderweitig zu nutzen, beispielsweise für Heizzwecke im Rahmen von Nah- oder Fernwärmeeinrichtungen. In diesem Fall muss dem thermodynamischen Kreislauf 11 des Dampfkraftprozesses der Stromerzeugungseinrichtung 4 zum Ausgleich vor dem Dampferzeuger 6 Wasser zugeführt werden, d.h. es liegt kein Kreislaufprozess im eigentlichen Sinn mehr vor. Diese Alternative ist in den Figuren nicht dargestellt.

Bei der Verbrennung der schwefelwasserstoffhaftigen Abgase 3 im Dampferzeuger 6 entstehen Verbrennungsgase 18. Diese werden einer Rauchgasentschwefelung 19 zugeführt, dort gereinigt und anschließend als gereinigtes Abgas 20 abgegeben, beispielsweise direkt an die Umwelt, es können aber auch weitere Abgasreinigungsschritte nach- oder vorgeschaltet sein.

Die Verbrennungsgase weisen aufgrund des Schwefelwasserstoffgehalts der Ausgangsgase im Vergleich zu Verbrennungsabgasen bekannter Anlagen einen sehr hohen Schwefeldioxid- und Schwefeltrioxidanteil auf. Dementsprechend muss eine hierfür geeignete Rauchgasentschwefelung 19 vorgesehen sein, beispielsweise eine mehrstufigen Rauchgasentschwefelung, vorzugsweise eine mehrstufige Rauchgasentschwefelung 19 umfassend einen Festbettreaktor zur Schwefeltrioxidabscheidung und eine Kalkwäsche zur Schwefeldioxidabscheidung. Das für die Rauchgasentschwefelung erforderliche Wasser kann bei einem in Meernähe gelegenen Standort der Vorrichtung mittels Meerwasserpumpen dem Meer entnommen werden.

Bei der Rauchgasentschwefelung 19 entsteht Gips 21, der einem Gipswerk 22 zur Herstellung von Gipsprodukten 23 zugeführt wird. Beispielsweise werden in diesem Gipswerk 22 Gipskartonplatten oder Fertiggipsmischungen unter Verwendung des Gipses 21 hergestellt.

Das Gipswerk 22 ist derart ausgebildet und eingerichtet, dass es seinen Bedarf an elektrischer Energie ganz oder teilweise aus dem von der Stromerzeugungseinrichtung 4 erzeugten Strom deckt, d. h. das Gipswerk 22 stellt einen der vorgenannten elektrischen Verbraucher dar, denen die Stromerzeugungseinrichtung 4 den aus der Verbrennung der schwefelwasserstoffhaltigen Abluft erzeugten Strom 24 zur Verfügung stellt.

Weiter deckt das Gipswerk 22 seinen Wärmebedarf ganz oder teilweise dadurch, dass es Dampf 26 aus dem vorstehend beschriebenen thermodynamischen Kreislauf 11 des Dampfkraftprozesses der Stormerzeugungseinrichtung 4 abzweigt und diesem abgezweigten Dampf 26 Wärmeenergie zu Erwärmung- und/oder Heizzwecken entzieht. Beispielsweise kann der abgezweigte Dampf 26 auf diese Weise zum Kalzinieren des Gipses 21 und/oder zum Trocknen von Gipskartonplatten im Gipswerk 22 eingesetzt werden.

Nach dieser thermischen Nutzung kann der abgezweigte Dampf 26 freigesetzt oder anderweitig genutzt werden. In diesem Fall muss dem thermodynamischen Kreislauf 11 des Dampfkraftprozesses der Stormerzeugungseinrichtung 4 zum Ausgleich Wasser zugeführt werden. Oder der abgezweigte Dampf 26 wird nach der thermischen Nutzung wieder in den thermodynamischen Kreislauf 11 des Dampfkraftprozesses der Stormerzeugungseinrichtung 4 zurückgeführt, so dass dieser Kreislauf im Wesentlichen hinsichtlich des Dampfes weiterhin geschlossen ist. Die Weiterführung des abgezweigten Dampfes 26 nach der thermischen Nutzung und die gegebenenfalls erforderliche Zuführung von Wasser in den thermodynamischen Kreislauf 11 sind in FIG 1 nicht dargestellt.

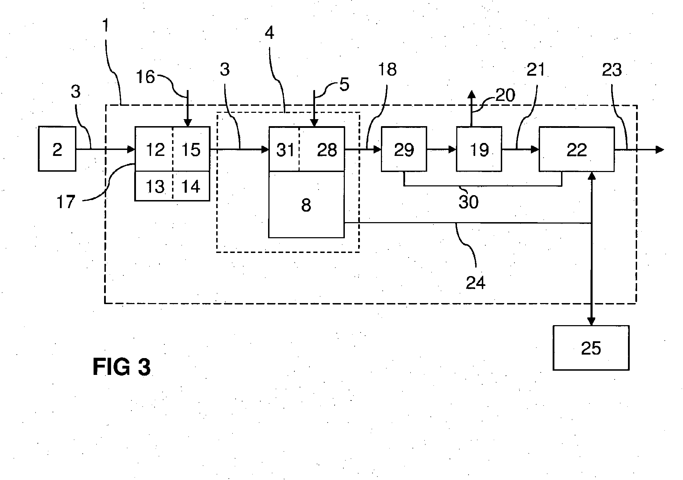

Das zweite Ausführungsbeispiel nach FIG 2 und das dritte Ausführungsbeispiel nach FIG 3 entsprechen hinsichtlich der Abgaszuführung und der Abgasmischeinrichtung 17 dem ersten Ausführungsbeispiel, so dass hierfür auf die vorausgehenden Ausführungen zu FIG 1 verwiesen wird.

Die zweite und dritte Ausführungsform unterscheiden sich jedoch in der verwendeten Stromerzeugungseinrichtung 4 vom ersten Ausführungsbeispiel. Anstelle eines Dampfkraftprozesses umfasst die Stromerzeugungseinrichtung 4 im zweiten Ausführungsbeispiel eine Gasturbine 27 und im dritten Ausführungsbeispiel ein Gasmotor 28, jeweils mit vorgeschaltetem Kompressor 31 für die zugeführte Abluft 3. Dieser Gasturbine 27 bzw. diesem Gasmotor 28 werden die wiederum gegebenenfalls hinsichtlich ihrer Zusammensetzung korrigierten schwefelwasserstoffhaltigen Abgase 3 zugeführt und in der Gastrubine 27 bzw. dem Gasmotor 28 verbrannt, unter Zuführung von Luft 5, vorzugsweise bei einer Verbrennungstemperatur von etwa 1300 °C. Die Gasturbine 27 bzw. der Gasmotor 28 sind mit einem Generator 8 gekoppelt, der von der Gasturbine 27 bzw. dem Gasmotor 28 zur Erzeugung von Strom 24 angetrieben wird. Der erzeugte Strom 24 kann wiederum wie im ersten Ausführungsbeispiel nach FIG 1 in ein öffentliches Stromnetz 25 eingespeist und/oder elektrischen Verbrauchern zur Verfügung gestellt werden.

Bei der Verbrennung der schwefelwasserstoffhaltigen Abgase 3 in der Gasturbine 27 bzw. dem Gasmotor 28 entstehen Verbrennungsgase 18. Diese werden zur weiteren energetischen Verwertung vor der Weiterführung an eine Rauchgasentschwefelung 19 durch einen Wärmetauscher 29 geleitet. Im Wärmetauscher 29 wird den Verbrennungsgasen 18 thermische Energie entzogen und über einen geeigneten Fluidkreislauf 30 einem Gipswerk 22 zugeführt, so dass dieses Gipswerk 22 seinen Wärmebedarf ganz oder teilweise hierdurch decken kann. Beispielsweise kann die den Verbrennungsgasen 18 entzogene Wärme auf diese Weise zum Kalzinieren des Gipses 21 und/oder zum Trocknen von Gipskartonplatten im Gipswerk 22 eingesetzt werden.

Alle weiteren Merkmale der Weiterführung der Verbrennungsgase 18, der Rauchgasentschwefelung 19 und des Gipswerks 22 entsprechen der bereits anhand des ersten Ausführungsbeispiels nach FIG 1 besprochenen Lösung, so dass diesbezüglich auf die vorstehenden Ausführungen verwiesen wird. Zum Verdeutlichen der Vorteile der Erfindung werden nachfolgend beispielhaft zwei Leistungsbilanzen eines Verfahrens 1 bzw. einer Vorrichtung 1 gemäß dem vorstehend anhand von FIG 1 beschriebenen ersten Ausführungsbeispiel angegeben.

Ausgangspunkt ist in beiden Leistungsbilanzen eine schwefelwasserstoffhaltige Abluft 3 mit einer zugeführten thermischen Leistung von 100 MW(th). Die Einheit MW steht für Megawatt. Die Ergänzung "th" verdeutlicht, dass es sich um eine thermische Leistung handelt, die nachfolgend verwendete Ergänzung "el" verdeutlicht, dass es sich um eine elektrische Leistung handelt.

Bei einem Betrieb ohne Dampfabzweigung 26 zur thermischen Nutzung im Gipswerk 22 wird folgende Leistung abgegeben:

| | |
|---|---|
| Stromnetz | 21,0 MW(el) |
| Abgasmischeinrichtung | 0,5 MW(el) |
| Dampferzeuger | 0,5 MW(el) |
| Kondensator (luftgekühlt) | 0,5 MW(el) |
| Rauchgasentschwefelung | 1,5 MW(el) |
| Mehrwasserpumpen (für Rauchgasentschwefelung) | 0,5 MW(el) |
| Gipswerk | 5,5 MW(el) |

Bei einem Betrieb mit Dampfabzweigung 26 zur thermischen Nutzung im Gipswerk 22 (Dampfstrom mit 21 bar Druck, 38 t/h zu einer Kalziniereinrichtung für Gips und einer Gipskartonplattentrocknung) wird folgende Leistung abgegeben:

| | |
|---|---|
| Stromnetz | 11,0 MW(el) |
| Abgasmischeinrichtung | 0,5 MW(el) |
| Dampferzeuger | 0,5 MW(el) |
| Kondensator (luftgekühlt) | 0,5 MW(el) |
| Rauchgasentschwefelung | 1,5 MW(el) |
| Mehrwasserpumpen (für Rauchgasentschwefelung) | 0,5 MW(el) |
| Gipswerk | 5,5 MW(el) |
| Gipswerk | 24,0 MW(th) |

### Bezugszeichenliste

- 1: Verfahren/Vorrichtung zur Erzeugung von Strom aus schwefelwasserstoffhaltigen Abgasen
- 2: Erdgas- und Erdölindustrie
- 3: Schwefelwasserstoffhaltige Abgase
- 4: Stromerzeugungseinrichtung
- 5: Luft
- 6: Dampferzeuger
- 7: Dampfturbine
- 8: Generator
- 9: Kondensator
- 10: Dampf
- 11: Thermodynamischer Kreislauf des Dampfkraftprozesses
- 12: Messeinrichtung
- 13: Auswertungseinrichtung
- 14: Steuereinrichtung
- 15: Zuführeinrichtung
- 16: Zumischgas
- 17: Abgasmischeinrichtung
- 18: Verbrennungsgase
- 19: Rauchgasentschwefelung
- 20: Gereinigtes Abgas
- 21: Gips
- 22: Gipswerk
- 23: Gipsprodukte
- 24: Strom
- 25: öffentliche Stromnetz
- 26: Abgezweigter Dampf für Wärmebedarf des Gipswerks
- 27: Gasturbine
- 28: Gasmotor
- 29: Wärmetauscher
- 30: Fluldkreislauf
- 31: Kompressor

## Patentansprüche

1. Verfahren (1) zur Erzeugung von Strom aus schwefelwasserstoffhaltigen Abgasen (3), insbesondere aus der Erdgas- und Erdölindustrie (2),
wobei die schwefelwasserstoffhaltigen Abgase (3) einer Stromerzeugungseinrichtung (4) zugeführt und dort, vorzugsweise unter Zuführung von Luft (5), verbrannt werden, wobei die bei der Verbrennung freiwerdende Energie zumindest teilweise zur Stromerzeugung eingesetzt wird,
**dadurch gekennzeichnet,**
**dass** die Zusammensetzung der schwefelwasserstoffhaltigen Abgase (3) vor der Verbrennung gemessen (12) und mit einer vorgegebenen Zusammensetzung oder einer vorgegebenen Zusammensetzungsbandbreite verglichen (13) wird, und
bei einem Abweichen von der vorgegebenen Zusammensetzung oder Zusammensetzungsbandbreite ein zur Korrektur erforderlicher zusätzlicher Anteil an Erdgas und/oder anderen Stoffen (16) ermittelt (14) und den schwefelwasserstoffhaltigen Abgasen vor der Verbrennung zugemischt (15) wird.

2. Verfahren nach Anspruch 1,
**dadurch gekennzeichnet, dass**
die Verbrennungstemperatur der schwefelwasserstoffhaltigen Abgase (3) bei mindestens etwa 1.300 °C liegt.

3. Verfahren nach Anspruch 1 oder 2,
**dadurch gekennzeichnet, dass**
die Stromerzeugungseinrichtung (4) einen Dampferzeuger (6) umfasst, der Teil des thermodynamischen Kreislaufes (11) eines Dampfkraftprozesses ist, der wiederum eine dem Dampferzeuger (6) nachgeschaltete Dampfturbine (7) und einen der Dampfturbine (7) nachgeschalteten Kondensator (9) umfasst,
wobei in dem Dampferzeuger (6) die Verbrennung der schwefelwasserstaffhaltigen Abgase (3) erfolgt und die freiwerdende Energie zumindest teilweise zur Dampferzeugung eingesetzt wird, und wobei die Stromerzeugung durch einen von der Dampfturbine (7) angetriebenen Generator (8) erfolgt.

4. Verfahren nach einem der vorhergehenden Ansprüche,
**dadurch gekennzeichnet, dass**
die Stromerzeugungseinrichtung (4) eine Gasturbine (27) und/oder einen Gasmotor (28) umfasst,
wobei die Stromerzeugung durch einen von der Gasturbine (27) und/oder dem Gasmotor (28) angetriebenen Generator (8) erfolgt.

5. Verfahren nach einem der vorhergehenden Ansprüche,
**dadurch gekennzeichnet, dass**
die vorgegebene Zusammensetzung oder die vorgegebenen Zusammensetzungsbandbreite der schwefelwasserstoffhaltigen Abgase (3) folgende Anteile in Molprozent vorsieht:
Schwefelwasserstoff: 1% bis 10%, insbesondere 3% bis 7%, vorzugsweise etwa 6%, und/oder
Kohlendioxid: 10% bis 90%, insbesondere 60% bis 70%, vorzugsweise etwa 65%, und/oder
Stickstoff: 0,0% bis 2,0%, insbesondere 0,2% bis 0,6%, vorzugsweise etwa 0,4%, und/oder
Methan: 0,1% bis 65%, insbesondere 12% bis 20%, vorzugsweise etwa 16%, und/oder
Ethan: 0,1% bis 20%, insbesondere 2% bis 8%, vorzugsweise etwa 5%, und/oder
Kohlenwasserstoffe (C4 bis C9): 0,01% bis 40%, insbesondere 4% bis 10%, vorzugsweise etwa 7%.

6. Verfahren nach einem der vorhergehenden Ansprüche,
**dadurch gekennzeichnet, dass**
die bei der Verbrennung der schwefelwasserstoffhaltigen Abgase (3) entstehenden Schwefeldioxid- und schwefeltrioxidhaltigen Verbrennungsabgase (18) einer Rauchgasentschwefelung (19) zugeführt werden,
wobei bei der Rauchgasentschwefelung Gips (21) entsteht, der einem Gipswerk (22) zugeführt wird zur Herstellung von Gipsprodukten (23), insbesondere Gipskartonplatten und/oder Fertiggipsmischungen.

7. Verfahren nach Anspruch 6,
**dadurch gekennzeichnet, dass**
die Rauchgasentschwefelung (19) einer mehrstufigen Rauchgasentschwefelung ist, vorzugsweise umfassend einen Festbettreaktor zur Schwefeltrioxidabscheidung und eine Kalkwäsche zur Schwefeldioxidabscheldung.

8. Verfahren nach Anspruch 6 oder 7,
**dadurch gekennzeichnet, dass**
das Gipswerk (22) seinen Bedarf an elektrischer Energie ganz oder teilweise aus der Stromerzeugung durch die Verbrennung der schwefelwasserstoffhaltigen Abgase (3) deckt, und/oder das Gipswerk (22) seinen Wärmebedarf ganz oder teilweise den bei der Verbrennung der schwefelwasserstoffhaftigen Abgase (3) entstehenden Verbrennungsgasen (18) und/oder den Stromerzeugungs-Prozessen, insbesondere dem thermodynamischen Kreislauf (11) des Dampfkraftprozesses, entnimmt.

9. Vorrichtung (1) zur Erzeugung von Strom aus schwefelwasserstoffhaltigen Abgasen (3), insbesondere aus der Erdgas- und Erdölindustrie (2), insbesondere mit einem Verfahren nach einem der vorhergehenden Ansprüche,
mit einer Stromerzeugungseinrichtung (4), in der zugeführte schwefelwasserstoffhaltige Abgase (3), vorzugsweise unter Zuführung von Luft (5), verbrannt werden, wobei die bei der Verbrennung freiwerdende Energie zumindest teilweise zur Stromerzeugung eingesetzt wird,
**dadurch gekennzeichnet, dass**
eine Messeinrichtung (12) zur Ermittlung der Zusammensetzung der schwefelwasserstoffhaltigen Abgase (3) vor der Verbrennung vorgesehen ist,
eine Auswertungseinrichtung (13) zum Vergleich der ermittelten Zusammensetzung mit einer vorgegebenen Zusammensetzung oder einer vorgegebenen Zusammensetzungsbandbreite vorgesehen ist, und
eine Steuereinrichtung (14) und eine Zuführeinrichtung (15) für Erdgas und/oder anderen Stoffen (16) vorgesehen sind, wobei die Steuereinrichtung (14) bei einem von der Auswertungseinrichtung (13) ermittelten Abweichen von der vorgegebenen Zusammensetzung oder Zusammensetzungsbandbreite einen zur Korrektur erforderlichen zusätzlicher Anteil an Erdgas und/oder anderen Stoffen (16) ermittelt und den schwefelwasserstoffhaltigen Abgasen (3) vor der Verbrennung über die Zuführeinrichtung (15) zumischt.

10. Vorrichtung nach Anspruch 9,
**dadurch gekennzeichnet, dass**
die Verbrennungstemperatur der schwefelwasserstoffhaltigen Abgase (3) bei mindestens etwa 1.300 °C liegt.

11. Vorrichtung nach Anspruch 9 oder 10,
**dadurch gekennzeichnet, dass**
die Stromerzeugungseinrichtung (4) einen Dampferzeuger (6) umfasst, der Teil des thermodynamischen Kreislaufes (11) eines Dampfkraftprozesses ist, der wiederum eine dem Dampferzeuger (6) nachgeschaltete Dampfturbine (7) und einen der Dampfturbine (7) nachgeschalteten Kondensator (9) umfasst,
wobei in dem Dampferzeuger (6) die Verbrennung der schwefelwasserstoffhaltigen Abgase (3) erfolgt und die freiwerdende Energie zumindest teilweise zur Dampferzeugung eingesetzt wird, und wobei zur Stromerzeugung ein von der Dampfturbine (7) angetriebener Generator (8) vorgesehen Ist.

12. Vorrichtung nach einem der Ansprüche 9 bis 11,
**dadurch gekennzeichnet, dass**
die Stromerzeugungseinrichtung (4) eine Gasturbine (27) und/oder einen Gasmotor (28) umfasst,
wobei zur Stromerzeugung ein von der Gasturbine (27) und/oder dem Gasmotor (28) angetriebener Generator (8) vorgesehen ist.

13. Vorrichtung nach einem der Ansprüche 9 bis 12,
**dadurch gekennzeichnet, dass**
die vorgegebene Zusammensetzung oder die vorgegebenen Zusammensetzungsbandbreite der schwefelwasserstoffhaltigen Abgase (3) folgende Anteile in Molprozent vorsieht:
Schwefelwasserstoff: 1% bis 10%, insbesondere 3% bis 7%, vorzugsweise etwa 6%, und/oder
Kohlendioxid: 10% bis 90%, insbesondere 60% bis 70%, vorzugsweise etwa 65%, und/oder
Stickstoff: 0,0% bis 2,0%, insbesondere 0,2% bis 0,6%, vorzugsweise etwa 0,4%, und/oder
Methan: 0,1% bis 65%, insbesondere 12% bis 20%, vorzugsweise etwa 16%, und/oder
Ethan: 0,1% bis 20%, insbesondere 2% bis 8%, vorzugsweise etwa 5%, und/oder
Kohlenwasserstoffe (C4 bis C9): 0,01% bis 40%, insbesondere 4% bis 10%, vorzugsweise etwa 7%.

14. Vorrichtung nach einem der Ansprüche 9 bis 13,
**dadurch gekennzeichnet,**
**dass** die Vorrichtung (1) eine Rauchgasentschwefelung (19) umfasst, die bei der Verbrennung der schwefelwasserstoffhaltigen Abgase (3) entstehende schwefeldioxid- und schwefeltrioxidhaltige Verbrennungsgase (18) reinigt, wobei Gips (21) entsteht, und
**dass** die Vorrichtung (1) ein Gipswerk (22) umfasst, das den bei der Rauchgasentschwefelung (19) entstehenden Gips (21) zur Herstellung von Gipsprodukten (23) einsetzt, insbesondere bei der Herstellung von Gipskartonplatten und/oder Fertiggipsmischungen.

15. Vorrichtung nach Anspruch14,
**dadurch gekennzeichnet, dass**
das Gipswerk (22) seinen Bedarf an elektrischer Energie ganz oder teilweise aus der Stromerzeugung durch die Verbrennung der schwefelwasserstoffhaltigen Abgase (3) deckt, und/oder das Gipswerk (22) seinen Wärmebedarf ganz oder teilweise den bei der Verbrennung der schwefelwasserstoffhaltigen Abgase (3) entstehenden Verbrennungsgasen (18) und/oder den Stromerzeugungs-Prozessen, insbesondere dem thermodynamischen Kreislauf (11) des Dampfkraftprozesses, entnimmt.

## Claims

1. Method (1) for generating current from hydrogen sulphide-containing exhaust gases (3), particularly from the natural gas and petroleum industry (2),
the hydrogen sulphide-containing exhaust gases (3) being delivered to a current generation device (4) and being burnt there, preferably with air (5) being supplied, the energy released during combustion being employed at least partially for current generation,
**characterized in that**
the composition of the hydrogen sulphide-containing exhaust gases (3) is measured (12) before combustion and is compared (13) with a stipulated composition or stipulated composition bandwidth, and, in the event of a deviation from the stipulated composition or composition bandwidth, an additional fraction of natural gas and/or other substances (16), which is required for correction, is determined (14) and is admixed (15) to the hydrogen sulphide-containing exhaust gases before combustion.

2. Method according to Claim 1,
**characterized in that**
the combustion temperature of hydrogen sulphide-containing exhaust gases (3) is at least about 1,300°C.

3. Method according to Claim 1 or 2,
**characterized in that**
the current generation device (4) comprises a steam generator (6) which is part of the thermodynamic circuit (11) of a steam power process, which, in turn, comprises a steam turbine (7) following the steam generator (6) and a condenser (9) following the steam turbine (7), the combustion of the hydrogen sulphide-containing exhaust gases (3) taking place in the steam generator (6), and the energy released being employed at least partially for steam generation, and current generation taking place by means of a generator (8) driven by the steam turbine (7).

4. Method according to one of the preceding claims,
**characterized in that**
the current generation device (4) comprises a gas turbine (27) and/or a gas engine (28), current generation taking place by means of a generator (8) driven by the gas turbine (27) and/or by the gas engine (28).

5. Method according to one of the preceding claims,
**characterized in that**
the stipulated composition or stipulated composition bandwidth of the hydrogen sulphide-containing exhaust gases (3) provides the following fractions as molar percentages:
hydrogen sulphide: 1% to 10%, in particular 3% to 7%, preferably about 6%, and/or
carbon dioxide: 10% to 90%, in particular 60% to 70%, preferably about 65%, and/or
nitrogen: 0.0% to 2,0%, in particular 0,2% to 0.6%, preferably about 0.4%, and/or
methane: 0.1% to 65%, in particular 12% to 20%, preferably about 16%, and/or
ethane: 0,1% to 20%, in particular 2% to 8%, preferably about 5%, and/or
hydrocarbons (C4 to C9): 0,01% to 40%, in particular 4% to 10%, preferably about 7%.

6. Method according to one of the preceding claims,
**characterized in that**
the sulphur dioxide-containing and sulphur trioxide-containing combustion exhaust gases (18) occurring during the combustion of the hydrogen sulphide-containing exhaust gases (3) are delivered for flue gas desulphurization (19), the flue gas desulphurization giving rise to gypsum (21) which is delivered to a gypsum mill (22) for the production of gypsum products (23), in particular gypsum plasterboards and/or ready-prepared gypsum mixtures.

7. Method according to Claim 6,
**characterized in that**
the flue gas desulphurization (19) is multi-stage flue gas desulphurization, preferably comprising a solid-bed reactor for sulphur trioxide separation and a lime scrub for sulphur dioxide separation.

8. Method according to Claim 6 or 7,
**characterized in that**
the gypsum mill (22) satisfies its demand for electrical energy completely or partially from current generation as a result of the combustion of the hydrogen sulphide-containing exhaust gases (3), and/or the gypsum mill (22) derives its heat demand completely or partially from the combustion gases (18) occurring during combustion of the hydrogen sulphide-containing exhaust gases (3) and/or from the current generation processes, in particular the thermodynamic circuit (11) of the steam power process.

9. Apparatus (1) for generating current from hydrogen sulphide-containing exhaust gases (3), particularly from the natural gas and petroleum industry (2), in particular by means of a method according to one of the preceding claims,
having a current generation device (4) in which supplied hydrogen sulphide-containing exhaust gases (3) are burnt, preferably with air (5) being supplied, the energy released during combustion being employed at least partially for current generation,
**characterized in that**
a measuring device (12) for determining the composition of the hydrogen sulphide-containing exhaust gases (3) before combustion is provided,
an evaluation device (13) for comparing the composition determined with a stipulated composition or with a stipulated composition bandwidth is provided, and
a control device (14) and a supply device (15) for natural gas and/or other substances (16) are provided, in the event of a deviation, determined by the evaluation device (13), from the stipulated composition or composition bandwidth, the control device (14) determining an additional fraction of natural gas and/or other substances (16), which is required for correction, and admixing it to the hydrogen sulphide-containing exhaust gases (3) via the supply device (15) before combustion.

10. Apparatus according to Claim 9,
**characterized in that**
the combustion temperature of the hydrogen sulphide-containing exhaust gases (3) is at least about 1,300°C.

11. Apparatus according to Claim 9 or 10,
**characterized in that**
the current generation device (4) comprises a steam generator (6) which is part of the thermodynamic circuit (11) of a steam power process, which, in turn, comprises a steam turbine (7) following the steam generator (6) and a condenser (9) following the steam turbine (7), the combustion of the hydrogen sulphide-containing exhaust gases (3) taking place in the steam generator (6), and the energy released being employed at least partially for steam generation, and a generator (8) driven by the steam turbine (7) being provided for current generation.

12. Apparatus according to one of Claims 9 to 11,
**characterized in that**
the current generation device (4) comprises a gas turbine (27) and/or a gas engine (28), a generator (8) driven by the gas turbine (27) and/or by the gas engine (28) being provided for current generation.

13. Apparatus according to one of Claims 9 to 12,
**characterized in that**
the stipulated composition or stipulated composition bandwidth of the hydrogen sulphide-containing exhaust gases (3) provides the following fractions as molar percentages:
hydrogen sulphide: 1% to 10%, in particular 3% to 7%, preferably about 6%, and/or
carbon dioxide: 10% to 90%, in particular 60% to 70%, preferably about 65%, and/or
nitrogen: 0.0% to 2.0%, in particular 0.2% to 0.6%, preferably about 0.4%, and/or
methane: 0.1% to 65%, in particular 12% to 20%, preferably about 16%, and/or
ethane: 0.1% to 20%, in particular 2% to 8%, preferably about 5%, and/or
hydrocarbons (C4 to C9): 0.01% to 40%, in particular 4% to 10%, preferably about 7%.

14. Apparatus according to one of Claims 9 to 13,
**characterized in that**
the apparatus (1) comprises flue gas desulphurization (19) which purifies sulphur dioxide-containing and sulphur trioxide-containing combustion gases (18) occurring during the combustion of the hydrogen sulphide-containing exhaust gases (3), gypsum (21) being obtained, and **in that** the apparatus (1) comprises a gypsum mill (22) which employs the gypsum (21) occurring during flue gas desulphurization (19) for the production of gypsum products (23), in particular in the production of gypsum plasterboards and/or ready-prepared gypsum mixtures.

15. Apparatus according to Claim 14,
**characterized in that**
the gypsum mill (22) satisfies its demand for electrical energy completely or partially from current generation as a result of the combustion of the hydrogen sulphide-containing exhaust gases (3), and/or the gypsum mill (22) derives its heat demand completely or partially from the combustion gases (18) occurring during the combustion of the hydrogen sulphide-containing exhaust gases (3) and/or from the current generation processes, in particular the thermodynamic circuit (11) of the steam power process.

## Revendications

1. Procédé (1) de production d'électricité à partir d'effluents gazeux (3) contenant du sulfure d'hydrogène, provenant en particulier de l'industrie (2) du gaz naturel et pétrolière,
dans lequel les effluents gazeux (3) contenant du sulfure d'hydrogène sont envoyés à une installation (4) de production d'électricité, et y sont brûlés, de préférence avec un apport d'air (5), l'énergie libérée lors de la combustion étant au moins en partie utilisée pour la production d'électricité, **caractérisé en ce que**
la composition des effluents gazeux (3) contenant du sulfure d'hydrogène est mesurée (12) avant la combustion et est comparée à une composition prédéfinie ou à une plage de compositions (13) prédéfinie, et
dans le cas d'un écart avec la composition ou la plage de compositions prédéfinie, une proportion supplémentaire, nécessaire à la correction, de gaz naturel et/ou d'autres substances (16), est déterminée (14) et est mélangée (15) avant la combustion aux effluents gazeux contenant du sulfure d'hydrogène.

2. Procédé selon la revendication 1, **caractérisé en ce que** la température de combustion des effluents gazeux (3) contenant du sulfure d'hydrogène est d'au moins environ 1300°C.

3. Procédé selon la revendication 1 ou 2, **caractérisé en ce que** l'installation (4) de production d'électricité comprend un générateur de vapeur (6), qui est une partie du circuit thermodynamique (11) d'un procédé de centrale thermique à vapeur, qui pour sa part comprend une turbine à vapeur (7) montée en aval du générateur de vapeur (6) et un condenseur (9) monté en aval de la turbine à vapeur (7),
dans lequel, dans le générateur de vapeur (6), la combustion des effluents gazeux (3) contenant du sulfure d'hydrogène a lieu, et l'énergie libérée est au moins partiellement utilisée pour la production de vapeur, et
dans lequel la production d'électricité est réalisée par une génératrice (8) entraînée par la turbine à vapeur (7).

4. Procédé selon l'une des revendications précédentes, **caractérisé en ce que** l'installation (4) de production d'électricité comprend une turbine à gaz (27) et/ou un moteur à gaz (28),
dans lequel la production d'électricité est réalisée par une génératrice (8) entraînée par la turbine à gaz (27) et/ou le moteur à gaz (28).

5. Procédé selon l'une des revendications précédentes, **caractérisé en ce que** la composition prédéfinie ou la plage de compositions prédéfinie des effluents gazeux (3) contenant du sulfure d'hydrogène prévoit les proportions suivantes, en pourcents en moles :
sulfure d'hydrogène : 1 % à 10 %, en particulier 3 % à 7 %, de préférence environ 6 %, et/ou
dioxyde de carbone : 10 % à 90 %, en particulier 60 % à 70 %, de préférence environ 65 %, et/ou
azote : 0,0 % à 2,0 %, en particulier 0,2 % à 0,6 %, de préférence environ 0,4 %, et/ou
méthane : 0,1 % à 65 %, en particulier 12 % à 20 %, de préférence environ 16 %, et/ou
éthane : 0,1 % à 20 %, en particulier 2 % à 8 %, de préférence environ 5 %, et/ou
hydrocarbures (C4 à C9) : 0,01 % à 40 %, en particulier 4 % à 10 %, de préférence environ 7 %.

6. Procédé selon l'une des revendications précédentes, **caractérisé en ce que** les effluents gazeux (18) de la combustion, contenant du dioxyde de soufre et du trioxyde de soufre, formés lors de la combustion des effluents gazeux (3) contenant du sulfure d'hydrogène, sont envoyés à une unité (19) de désulfuration des fumées,
dans lequel, lors de la désulfuration des fumées, il se forme du gypse (21), qui est envoyé à une usine de plâtre (22), pour la fabrication de produits de plâtre (23), en particulier des plaques de plâtre et/ou des mélanges finis de plâtre.

7. Procédé selon la revendication 6, **caractérisé en ce que** l'unité (19) de désulfuration des fumées est une unité de désulfuration des fumées à plusieurs étages, comprenant de préférence un réacteur à lit fixe pour séparer le dioxyde de soufre et une unité de lavage à la chaux pour la séparation du dioxyde de soufre.

8. Procédé selon la revendication 6 ou 7, **caractérisé en ce que** l'usine de plâtre (22) couvre ses besoins en énergie électrique en totalité ou en partie par la production d'électricité réalisée par la combustion des effluents gazeux (3) contenant du sulfure d'hydrogène, et/ou l'usine de plâtre (22) tire ses besoins en chaleur en totalité ou en partie des gaz de combustion (18) se formant lors de la combustion des effluents gazeux (3) contenant du sulfure d'hydrogène et/ou des opérations de production d'électricité, en particulier du circuit thermodynamique (11) du procédé de centrale à vapeur.

9. Dispositif (1) pour la production d'électricité à partir d'effluents gazeux (3) contenant du sulfure d'hydrogène, provenant en particulier de l'industrie (2) du gaz naturel et/ou pétrolière, en particulier à l'aide d'un procédé selon l'une des revendications précédentes,
comportant un dispositif (4) de production d'électricité, dans lequel des effluents gazeux (3) contenant du sulfure d'hydrogène, qui y sont amenés, sont brûlés de préférence avec un apport d'air (5), l'énergie libérée lors de la combustion étant au moins en partie utilisée pour la production d'électricité, **caractérisé en ce que**
un dispositif de mesure (12) est prévu pour déterminer la composition des effluents gazeux (3) contenant du sulfure d'hydrogène avant la combustion, une unité d'évaluation (13) est prévue pour comparer la composition déterminée à une composition prédéfinie ou à une plage de compositions prédéfinies, et
un dispositif de commande (14) et un dispositif d'amenée (15) sont prévus pour le gaz naturel et/ou d'autres substances (16), le dispositif de commande (14) déterminant, dans le cas d'un écart, déterminé par le dispositif d'évaluation (13), avec la composition ou la plage de compositions prédéfinie, une proportion supplémentaire, nécessaire à la correction, de gaz naturel et/ou d'autres substances (16), et l'ajoutant, par le dispositif d'amenée (15), avant la combustion aux effluents gazeux (3) contenant du sulfure d'hydrogène.

10. Procédé selon la revendication 9, **caractérisé en ce que** la température de combustion des effluents gazeux (3) contenant du sulfure d'hydrogène est d'au moins 1300°C.

11. Dispositif selon la revendication 9 ou 10, **caractérisé en ce que** l'installation (4) de production d'électricité comprend un générateur de vapeur (6), qui est une partie du circuit thermodynamique (11) d'un procédé de centrale thermique à vapeur, qui pour sa part comprend une turbine à vapeur (7) montée en aval du générateur de vapeur (6) et un condenseur (9) monté en aval de la turbine à vapeur (7),
dans lequel, dans le générateur de vapeur (6), la combustion des effluents gazeux (3) contenant du sulfure d'hydrogène a lieu, et l'énergie libérée est au moins partiellement utilisée pour la production de vapeur, et
une génératrice (8) entraînée par la turbine à vapeur (7) est prévue pour la production d'électricité.

12. Dispositif selon l'une des revendications 9 à 11, **caractérisé en ce que** le dispositif (4) de production d'électricité comprend une turbine à gaz (27) et/ou un moteur à gaz (28),
une génératrice (8), entraînée par la turbine à gaz (27) et/ou le moteur à gaz (28), étant prévue pour la production d'électricité.

13. Dispositif selon l'une des revendications 9 à 12, **caractérisé en ce que** la composition prédéfinie ou la plage de compositions prédéfinie des effluents gazeux (3) contenant du sulfure d'hydrogène prévoit les proportions suivantes, en pourcents en moles :
sulfure d'hydrogène : 1 % à 10 %, en particulier 3 % à 7 %, de préférence environ 6 %, et/ou
dioxyde de carbone : 10 % à 90 %, en particulier 60 % à 70 %, de préférence environ 65 %, et/ou
azote : 0,0 % à 2,0 %, en particulier 0,2 % à 0,6 %, de préférence environ 0,4 %, et/ou
méthane : 0,1 % à 65 %, en particulier 12 % à 20 %, de préférence environ 16 %, et/ou
éthane : 0,1 % à 20 %, en particulier 2 % à 8 %, de préférence environ 5 %, et/ou
hydrocarbures (C4 à C9) : 0,01 % à 40 %, en particulier 4 % à 10 %, de préférence environ 7 %.

14. Dispositif selon l'une des revendications 9 à 13, **caractérisé en ce que** le dispositif (1) comprend une unité (19) de désulfuration des fumées, qui purifie les gaz de combustion (18), contenant du dioxyde de soufre et du trioxyde de soufre, qui se forment lors de la combustion des effluents gazeux (3) contenant du sulfure d'hydrogène, ce qui provoque la formation de gypse (21), et
**en ce que** le dispositif (1) comprend une usine de plâtre (22), qui utilise le gypse (21) qui se forme lors de la désulfuration (19) des fumées pour la fabrication de produits de plâtre (23), en particulier lors de la fabrication de plaques de plâtre et/ou de mélanges de plâtre fini.

15. Dispositif selon la revendication 14, **caractérisé en ce que** l'usine de plâtre (22) couvre ses besoins en énergie électrique en totalité ou en partie par la production d'électricité réalisée par la combustion des effluents gazeux (3) contenant du sulfure d'hydrogène, et/ou l'usine de plâtre (22) tire ses besoins en chaleur en totalité ou en partie des gaz de combustion (18) se formant lors de la combustion des effluents gazeux (3) contenant du sulfure d'hydrogène et/ou des opérations de production d'électricité, en particulier du circuit thermodynamique (11) du procédé de centrale à vapeur.
